(19) **Europäisches Patentamt**

**European Patent Office**    (11)   Veröffentlichungsnummer:    **0 019 746**

**Office européen des brevets**                                                   **A1**

(12)                        **EUROPÄISCHE PATENTANMELDUNG**

(21)   Anmeldenummer: **80102436.5**        (51)   Int. Cl.³: **H 04 N 7/00**

(22)   Anmeldetag: **05.05.80**

(30)   Priorität: **16.05.79 AT 3617/79**            (71)   Anmelder: **SIEMENS AKTIENGESELLSCHAFT Berlin und München, Postfach 22 02 61, D-8000 München 22 (DE)**

(43)   Veröffentlichungstag der Anmeldung: **10.12.80 Patentblatt 80/25**

(72)   Erfinder: **Biebl, Hans, Dipl.-Ing., Friedrich-Schmiedl-Strasse 13, A-3011 Untertullnerbach (AT)**
         Erfinder: **Kubalek, Pavel, Spengergasse 22, A-1050 Wien (AT)**
         Erfinder: **Beckmann, Oskar, Dipl.-Ing., Stossgasse 42, A-3100 St. Pölten (AT)**

(84)   Benannte Vertragsstaaten: **BE CH DE FR GB IT LI LU NL SE**

(54)   **Richtfunksystem für Gross-Gemeinschafts-Antennenanlagen.**

(57)   Die Erfindung bezieht sich auf ein Richtfunksystem für Gross-Gemeinschafts-Antennenanlagen mit einer Richtfunkstrecke nach CCITT-Norm zur Übertragung von frequenzmodulierten Signalen und mit von Abzweigstellen der Richtfunkstrecke zu den Antennenanlagen-Kopfstationen führenden Zubringer-Richtfunkstrecken nach CCITT-Norm zur Übertragung von frequenz- und amplitudenmodulierten Signalen. Bei einem solchen Richtfunksystem soll die Qualität der Übertragung wesentlich verbessert werden. Die Erfindung sieht hierzu vor, dass das über die Richtfunkstrecke (RFS) übertragene (Bild- und Ton-) Signal sowohl mit einer ersten Zwischenfrequenz (1.ZF) amplitudenmoduliert als auch mit einer zweiten Zwischenfrequenz (2.ZF) frequenzmoduliert ist. In den Abzweigstellen (AZW) der Richtfunkstrecke (RFS) sind Umsetzer (7) zur Umsetzung von der ersten Zwischenfrequenz (1.ZF) auf einen UHF-Kanal der Zubringer-Richtfunkstrecke (ZRS) vorgesehen, über die das noch mit der zweiten Zwischenfrequenz (2.ZF) frequenzmodulierte Signal zur Antennenanlagen-Kopfstation (KSA) übertragen wird, in welcher ein Frequenzdemodulator (11) zur Demodulation der zweiten Zwischenfrequenz (2.ZF) vorgesehen ist.

79 P 9 6 1 4 EUR

Richtfunksystem für Groß-Gemeinschafts-Antennenanlagen
-----------------------------------------------------------

Die Erfindung betrifft ein Richtfunksystem für Groß-Gemeinschafts-Antennenanlagen mit einer Richtfunkstrecke nach CCITT-Norm (Postnorm) zur Übertragung von frequenzmodulierten Signalen und mit von Abzweigstellen der Richtfunkstrecke zu den Antennenanlagen-Kopfstationen führenden Zubringer-Richtfunkstrecken nach CCIR-Norm (Rundfunknorm) zur Überwachung von frequenz- oder amplitudenmodulierten Signalen.

Die Übertragung ausländischer Fernsehsignale, die beispielsweise von einer Satelliten-Empfangsstation empfangen werden, zu Groß-Gemeinschafts-Antennenanlagen erfolgt üblicherweise mit Hilfe einer Richtfunkstrecke hoher Übertragungsqualität (frequenzmoduliert ent-sprechend der Postnorm) zu den in die Richtfunkstrecke eingeschalteten Abzweigstellen (Relaisstellen) für Richtfunkstrecken gerin-gerer Übertragungsqualität (amplitudenmoduliert entsprechend der Rundfunknorm), die als Zubringer-Richtfunkstrecken zu den zugehörigen Kopfstationen der einzelnen Antennenanlagen dienen. Bei

- 2 -

diesem System werden zwar bei den Zubringerstrecken Kosten gespart, jedoch wird dafür eine Signalverschlechterung in Kauf genommen. Überdies müssen wegen der dabei erforderlichen Umwand ung frequenzmodulierter Signale an den Abzweigstellen und Zuschaltungsstellen hochwerte Modulatoren und Demodulatoren verwendet werden.

Die Erfindung hat sich die Aufgabe gestellt, bei annähernd gleichem Kostenaufwand die Qualität der Übertragung wesentlich zu verbessern und erzielt dies dadurch, daß das über die Richtfunkstrecke übertragene (Bild- und Ton-)Signal sowohl mit einer ersten Zwischenfrequenze amplitudenmoduliert als auch mit einer zweiten Zwischenfrequenz frequenzmoduliert ist und daß in den Abzweigstellen der Richtfunkstrecke Umsetzer zur Umsetzung von der ersten Zwischenfrequenz auf einen UHF-Kanal der Zubringer-Richtfunkstrecke vorgesehen sind, über die das noch mit der zweiten Zwischenfrequenz frequenzmodulierte Signal zur Antennenanlagen-Kopfstation übertragen wird, in welcher ein Frequenzdemodulator zur Demodulation der zweiten Zwischenfrequenz vorgesehen ist.

Eine fernsehapparategemäße Empfangslage des Ausgangssignales wird nach einem weiteren Merkmal der Erfindung durch einen in der Kopfstation vorgesehenen Umsetzer erzielt, der das über die Zubringer-Richtfunkstrecke empfangene Signal vor der Frequenzdemodulation der zweiten Zwischenfrequenz von der UHF-Frequenzlage in eine Zwischenfrequenzlage umsetzt, wobei nach der Frequenzdemodulation eine Umsetzung in eine Kanalfrequenz der Antennenanlage vorgesehen ist.

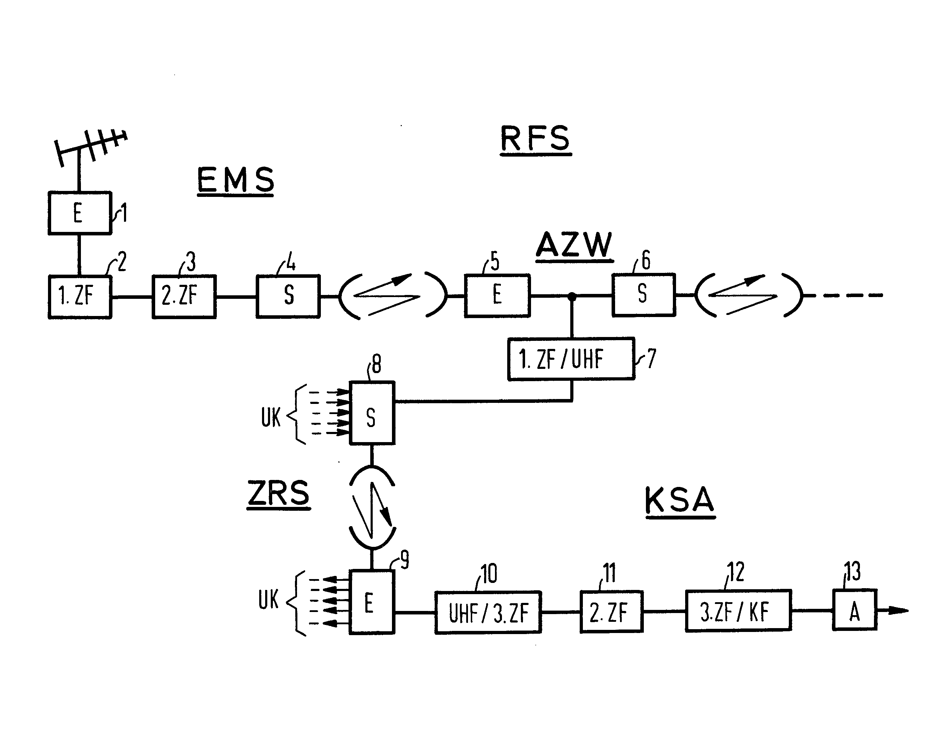

Ein Ausführungsbeispiel der Erfindung ist in der Zeichnung dargestellt. Es zeigt den prinzipiellen Aufbau einer von einer Satellitenfunk-Empfangsstation EMS gespeisten Richtfunkstrecke RFS mit einer Abzweigstelle AZW, von der eine Zubringer-Richtfunkstrecke ZRS zur Kopfstation KSA einer Groß-Gemeinschafts-Antennenanlage führt.

Das von der Empfangsstation EMS empfangene Bild- und Tonsignal
wird von einem Eingangsumsetzer 1 aufbereitet und in einem nachgeschalteten Umsetzer 2 mit einer ersten Zwischenfrequenz von beispielsweise 38 MHz amplitudenmoduliert. Die Aufbereitung des
empfangenen Signals im Eingangsumsetzer 1 ist so gewählt, daß sich
am Ausgang des Umsetzers 2 ein im folgenden als "Basisband" bezeichnetes Frequenzband mit einem Bildträger von 2 MHz und einem
Tonträger von 7,5 MHz ergibt. Die Größe dieses Frequenzbandes ist
so gewählt, daß es den für Postrichtfunkstrecken geltenden Bestimmungen, nämlich einer Beschränkung auf 10 MHz entspricht. Dieses Basisband wird in einem nachgeschalteten Modulator 3 mit einer zweiten Zwischenfrequenz von beispielsweise 70 MHz frequenzmoduliert, danach einem Sender 4 zugeführt und von diesem mit
einer Frequenz von 2,7 GHz ausgesendet.

Das vom Sender 4 gelieferte Signal wird vom Empfänger 5 der Abzweigstelle AZW, die zugleich auch eine Relaisstelle der Richtfunkstrecke RFS ist, empfangen und einerseits einem Sender 6 für
den weiteren Teil der Richtfunkstrecke RFS und anderseits einem
Umsetzer 7 zugeführt, in welchem das Signal von der ersten
Zwischenfrequenz (38 MHz) auf einen UHF-Kanal umgesetzt wird.
Dieser Kanal wird zusammen mit etwa 12 bis 14 weiteren UHF-Kanälen
UK mittels eines weiteren Senders 8 über die 13 GHz-Zubringer-
Richtfunkstrecke ZRS der Kopfstation KSA der Antennenanlage zugeführt.

Im Empfänger 9 der Kopfstation KSA werden einerseits die über die
Richtfunkstrecke ZRS mit übertragenen UHF-Kanäle UK getrennt der
separaten Weiterverarbeitung zugeführt und anderseits das Signal
der Richtfunkstrecke RFS einem Umsetzer 10 zugeführt. Im Umsetzer
10 wird das Signal, das immer noch mit der zweiten Zwischenfrequenz moduliert ist, von der UHF auf eine dritte Zwischenfrequenz,
deren Wert vorzugsweise gleich dem der ersten Zwischenfrequenz,
also 38 MHz ist, umgesetzt. In einem nachgeschalteten Demodulator 11 wird die zweite Zwischenfrequenz (70 MHz) dem Signal entzogen, sodaß am Ausgang des Demodulators 11 das "Basisband" wieder auftritt. Ein weiterer Umsetzer 12 setzt die dritte Zwischenfrequenz in eine Kanalfrequenz KF der Antennenanlage um, die über ein Ausgangsglied den angeschlossenen Fernsehgeräten zugeführt wird.

Patentansprüche:

1. Richtfunksystem für Groß-Gemeinschafts-Antennenanlagen mit einer Richtfunkstrecke nach CCITT-Norm (Postnorm) zur Übertragung von frequenzmodulierten Signalen und mit von Abzweigstellen der Richtfunkstrecke zu den Antennenanlagen-Kopfstationen führenden Zubringer-Richtfunkstrecken nach CCIR-Norm (Rundfunknorm) zur Übertragung von frequenz- oder amplitudenmodulierten Signalen, d a d u r c h   g e k e n n z e i c h n e t, daß das über die Richtfunkstrecke (RFS) übertragene (Bild- und Ton-)Signal sowohl mit einer ersten Zwischenfrequenz (1.ZF) amplitudenmoduliert als auch mit einer zweiten Zwischenfrequenz (2.ZF) frequenzmoduliert ist und daß in den Abzweigstellen (AZW) der Richtfunkstrecke (RFS) Umsetzer (7) zur Umsetzung von der ersten Zwischenfrequenz (1.ZF) auf einen UHF-Kanal der Zubringer-Richtfunkstrecke (ZRS) vorgesehen sind, über die das noch mit der zweiten Zwischenfrequenz (2.ZF) frequenzmodulierte Signal zur Antennenanlagen-Kopfstation (KSA) übertragen wird, in welcher ein Frequenzdemodulator (11) zur Demodulation der zweiten Zwischenfrequenz (2.ZF) vorgesehen ist.

2. Richtfunksystem nach Anspruch 1, d a d u r c h   g e k e n n z e i c h n e t, daß in der Kopfstation (KSA) ein Umsetzer (10) vorgesehen ist, der das über die Zubringer-Richtfunkstrecke (ZRS) empfangene Signal vor der Frequenzdemodulation (11) der zweiten Zwischenfrequenz von der UHF-Frequenzlage in eine Zwischenfrequenzlage (3. ZF) umsetzt und daß nach der Frequenzdemodulation (11) eine Umsetzung (12) in eine Kanalfrequenz (KF) der Antennenanlage vorgesehen ist.

SIEMENS AKTIENGESELLSCHAFT ÖSTERREICH

durch:

RFS

EMS

AZW

| 1 | E |

| 2 | 1. ZF | | 3 | 2. ZF | | 4 | S | | 5 | E | | 6 | S |

| 7 | 1. ZF / UHF |

| 8 | S |

UK

ZRS

KSA

| 9 | E |

| 10 | UHF / 3. ZF | | 11 | 2. ZF | | 12 | 3. ZF / KF | | 13 | A |

UK

1/1

0019746

# Europäisches Patentamt

## EUROPÄISCHER RECHERCHENBERICHT

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| X | FR - A - 2 232 894 (LABORATOIRE GENERAL DES TELECOMMUNICATIONS)<br><br>* Seite 1, Zeilen 18-24; Seite 2, Zeilen 24-30; Seite 4, Zeile 11 bis Seite 9, Zeile 19 * | 1,2 | H 04 N 7/00 |
| | DE - A - 2 061 149 (SIEMENS)<br><br>* Seite 7, letzter Absatz; Seite 10, Absatz 1 bis Seite 11, Zeile 16; Seite 12, Zeilen 1-12; Seite 15, Anspruch 2; Seite 16, Anspruch 3 * | 1,2 | |
| | RADIO MENTOR ELECTRONIC, Band 42, Nr. 2 Februar 1976, München, DE, "12-GHz-TV-Richtfunkstrecke über-brückt 15 km in Halbleiter-Technik" Seite 52<br><br>* Seite 52, Mittelspalte, Zeile 20 bis rechte Spalte, Zeile 4 * | 1 | RECHERCHIERTE SACHGEBIETE (Int. Cl. 3)<br><br>H 04 N 7/00 |
| | FUNKSCHAU, Band 46, Nr. 18, 1974, München, DE, A. KÖHLER: "Satelliten-Fernseh-empfang in Gemeinschaftsantennen-Anlagen", Seiten 689-692<br><br>* Seite 690, rechte Spalte, Absatz 3 bis Seite 692, linke Spalte, Zeile 2 * | 1,2 | |

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 21-08-1980 | DE ROECK |

EPA form 1503.1 06.78